# EUROPÄISCHE PATENTSCHRIFT

(11) **EP 3 535 504 B1**
(45) Veröffentlichungstag und Bekanntmachung des Hinweises auf die Patenterteilung: **24.06.2020**
(21) Anmeldenummer: 17793565.7
(22) Anmeldetag: 19.10.2017
(51) Int. Cl.: F16G 13/12, F16G 15/12

(54) **FLACHGLIEDERKETTE**
FLAT LINK CHAIN
CHAÎNE À MAILLONS PLATS

(30) Priorität: 03.11.2016 DE 102016121013
(43) Veröffentlichungstag der Anmeldung: 11.09.2019
(73) Patentinhaber: Thiele GmbH & Co. KG, 58640 Iserlohn (DE)
(72) Erfinder: VORWERK, Dirk, 58097 Hagen (DE)
(74) Vertreter: Osterhoff, Utz
(86) Internationale Anmeldenummer: PCT/DE2017/100909
(87) Internationale Veröffentlichungsnummer: WO 2018/082737

(56) Entgegenhaltungen:
- FR-A- 876 691
- US-A- 3 410 085
- US-A- 4 498 284
- US-A- 5 078 654

## Beschreibung

Die vorliegende Erfindung betrifft eine Gliederkette aufweisend Horizontalglieder und Vertikalglieder gemäß den Merkmalen im Oberbegriff von Patentanspruch 1.

In Rede stehende Gliederketten werden insbesondere im Bergbau eingesetzt und hier insbesondere im untertätigen Bergbau. Sie benötigen eine große Festigkeit zur Übertragung der Bewegungsenergie auf Gewinnungsgeräte, beispielsweise als Hobel- oder aber auch als Förderkette. In solchen Kettentrieben laufen die Ketten über Kettenräder angetrieben, insbesondere in einem Obertrum und einem Untertrum.

Hierzu bestehen die Gliederketten aus Horizontalgliedern, die im Einbauzustand im Wesentlichen horizontal verlaufen und Vertikalgliedern, welche im Einbauzustand im Wesentlichen vertikal orientiert verlaufend angeordnet sind. Die Horizontal- und Vertikalglieder sind jeweils für sich als insbesondere umlaufendes Kettenglied ausgebildet. Sie weisen hierzu jeweils zwei parallel liegende Schenkel auf. Die Schenkel sind an ihren Enden über und Vertikalkettenglieder jeweils ineinander. Während ihres Einsatzes sind die Ketten neben der zu übertragenden Zugkraft, insbesondere auch abrasivem Verschleiß ausgesetzt.

Beispielsweise ist aus der DE 39 30 842 A1 eine Kette bekannt, welche in der Höhe beim Vertikalglied und in der Breite beim Horizontalglied jeweils reduziert ist.

Aus der FR 876 691 ist eine gegossene Ankerkette zum Einsatz in Schiffen bekannt, bei der aufeinander zulaufende Schenkel einen vergrößerten Querschnitt aufweisen, so dass auch ein Querschnitt in der Rundung vergrößert ist.

Aufgabe der vorliegenden Erfindung ist es, eine Gliederkette bereitzustellen, die in Bezug auf ihr Eigengewicht und die zu übertragende Zugkraft sowie den auftretenden Verschleiß gegenüber dem Stand der Technik optimiert und verbessert ist.

Die zuvor genannte Aufgabe wird bei einer Gliederkette gemäß den Merkmalen im Patentanspruch 1 gelöst.

Vorteilhafte Ausgestaltungsvarianten der Erfindung sind in den abhängigen Ansprüchen beschrieben.

Die Gliederkette kann auch als Förderkette oder Flachgliederkette bezeichnet werden.

Sie wird insbesondere in der Fördertechnik und hier ganz besonders bevorzugt im Bergbau, insbesondere im untertätigen Bergbau eingesetzt. Die einzelnen Kettenglieder sind aus einem Stahlwerkstoff hergestellt und die Gliederkette weist als Kettenglieder Horizontalglieder und Vertikalglieder auf. Jedes Horizontalglied und jedes Vertikalglied verfügt über jeweils parallel zueinander verlaufende Schenkel, wobei die Schenkel endseitig über je eine Rundung miteinander verbunden sind.

Ein jeder Schenkel weist eine geringere Querschnittsfläche auf, gegenüber einer Querschnittsfläche einer jeden Rundung. Dies ist sowohl bei den Horizontalgliedern als auch bei den Vertikalgliedern ausgebildet.

Erfindungsgemäß zeichnet sich die Gliederkette dadurch aus, dass die jeweilige Querschnittsfläche der Schenkel des Horizontalgliedes eine geringere Breite aufweist, bei gleicher oder verringerter Höhe in Relation zu der Querschnittsfläche der Rundung und dass weiterhin die jeweilige Querschnittsfläche der Schenkel des Vertikalgliedes eine geringere Höhe aufweist, bei gleicher oder verringerter Breite in Relation zu der Querschnittsfläche der Rundung des Vertikalgliedes.

Durch die verringerte Querschnittsfläche in den Schenkeln im Vergleich zur Rundung wird zunächst realisiert, dass die damit hergestellte Gliederkette leichter ist, gegenüber einer vergleichbaren Gliederkette mit gleicher Querschnittsfläche in den Schenkeln. Es kann auch eine verringerte Querschnittsfläche in den Schenkeln nur eines Kettengliedes, entweder Horizontalglied oder Vertikalglied ausgebildet sein.

Die zu übertragende Zugkraft ist aufgrund der Querschnittsabnahme in den Schenkeln nicht beeinflusst. Mithin steht die volle aufgrund der Querschnittsfläche der Rundung mögliche zu übertragende Zugkraft zur Verfügung. Der im Betrieb der Gliederkette auftretende Verschleiß reduziert sich aufgrund des geringen Eigengewichtes der Gliederkette. Durch die geringeren Querschnittsflächen, insbesondere im Bereich der Schenkel, kann gleichzeitig Materialaufwand zur Herstellung der Gliederkette eingespart werden, weshalb auch die Materialkosten sinken.

ist die Querschnittsfläche der Schenkel von Horizontalglied und Vertikalglied jeweils gleich. Eine Optimierung hinsichtlich des Materialeinsatzes in der Querschnittsfläche kann somit stattfinden. Weiterhin besonders bevorzugt ist ein Übergangsbereich von der Querschnittsfläche des Schenkels zu der Querschnittsfläche der Rundung am Ende eines jeweiligen Schenkels beginnend ausgebildet, insbesondere ab dem Ende eines jeweiligen Schenkels. Besonders bevorzugt ist dies bei dem Horizontalglied ausgebildet. Der Übergangsbereich erstreckt sich dann vorzugsweise in der Seitenansicht über einen Winkel größer 0° bis kleiner 45°. Beispielsweise kann der Übergangsbereich sich auch nur über einen Winkel größer 0°, bevorzugt mehr als 3°, insbesondere mehr als 4° und besonders bevorzugt mehr als 5° bis kleiner 35°, insbesondere kleiner 30°, bevorzugt kleiner 25° und besonders bevorzugt kleiner 20° erstrecken. Ab hier beginnt dann die Rundung bzw. die Querschnittsfläche der Rundung. Bevorzugt ist insbesondere beim Horizontalglied die Querschnittsfläche über die gesamte Rundung konstant ausgebildet.

Insbesondere bei dem Horizontalglied ist der Übergangsbereich als Anschlag für einen Mitnehmer, beispielsweise einen Mitnehmer eines Kratzerförderers ausgebildet.

Damit die Gliederkette durch Führungsvorrichtungen insbesondere über Kettenräder laufen kann, ist bevorzugt der Hüllkreis der Querschnittsfläche des Schenkels in einem Hüllkreis der Querschnittsfläche der Rundung liegend.

Weiterhin bevorzugt ist eine absolute Höhe des Horizontalgliedes größer als eine Höhe des Vertikalgliedes. Die Höhe des Horizontalgliedes ist dabei in Horizontalrichtung bemessen, die Höhe des Vertikalgliedes in Vertikalrichtung. Die Angaben Höhe und Breite beziehen sich jeweils auf das Kettenglied, nicht auf die Einbaulage.

Weiterhin bevorzugt ist die Querschnittsfläche des jeweiligen Schenkels von einer kreisrunden Kontur verschieden. Insbesondere betrifft dies die Querschnittsfläche des Schenkels des Vertikalgliedes, als auch die Querschnittsfläche des Schenkels eines Horizontalgliedes. Besonders bevorzugt kommt hier eine im Wesentlichen jeweils rechteckige Querschnittskonfiguration mit abgerundeten Ecken zum Einsatz. Eine jeweilige Außenseite des Schenkels ist im Querschnitt besonders bevorzugt abgerundet, insbesondere einer Kontur der Rundung im Querschnitt folgend.

Weiterhin besonders bevorzugt ist die Querschnittskontur des Schenkels des Horizontalgliedes an einer Innenseite flach ausgebildet. Bevorzugt sind auch die Seitenflächen im Querschnitt flach ausgebildet. Die jeweiligen Eckübergänge sind abgerundet ausgebildet. Alternativ ist es möglich, dass die Seitenflächen als zweiteilig in einem Winkel zueinander verlaufende Flächen ausgebildet sind.

Die Querschnittskontur des Schenkels des Vertikalgliedes ist insbesondere rechteckig ausgebildet. Auf die Vertikalrichtung bezogen in Einbaulage des Vertikalgliedes erstreckt sich die längere Seite des Rechteckes in Horizontalrichtung und die kürzere Seite in Vertikalrichtung. Die jeweiligen Eckübergänge sind auch hier bevorzugt abgerundet ausgebildet.

Weiterhin besonders bevorzugt kann die Querschnittsfläche der Rundung selbst entlang der Rundung variieren. Insbesondere wird dies beim Vertikalglied ausgebildet. Der Rundung folgend ergibt sich somit jeweils eine variierende Querschnittsfläche.

Besonders bevorzugt ist dies derart ausgebildet, dass die jeweilige Querschnittsfläche von einer Mittelebene, in Seitenansicht der Rundung folgend, bis zu einem Winkel zwischen 45° und 80° zunehmend ausgebildet ist. Bei Erreichen der maximalen Zunahme der Querschnittsfläche im oben genannten Winkelbereich nimmt dann die Querschnittsfläche zum Schenkel hin bzw. zum Übergangsbereich wieder ab. Insbesondere erfolgt hierbei eine optimale Auslegung des Vertikalgliedes bei Umlenkung und Kraftübertragung auf einem Kettenrad.

Weitere Vorteile, Merkmale, Eigenschaften und Aspekte der vorliegenden Erfindung sind in den schematischen Figuren dargestellt. Es zeigen:
- Figur 1: einen Teil einer Gliederkette mit Horizontalglied in Seitenansicht und Vertikalglied in Draufsicht,
- Figur 2: die Ansicht aus Figur 1 mit Vertikalglied in Seitenansicht und Horizontalglied in Draufsicht,
- Figur 3: eine Schnittansicht durch ein Horizontalglied gemäß Schnittlinie A-A aus Figur 1 und
- Figur 4: eine Schnittansicht gemäß Schnittlinie B-B aus Figur 2.

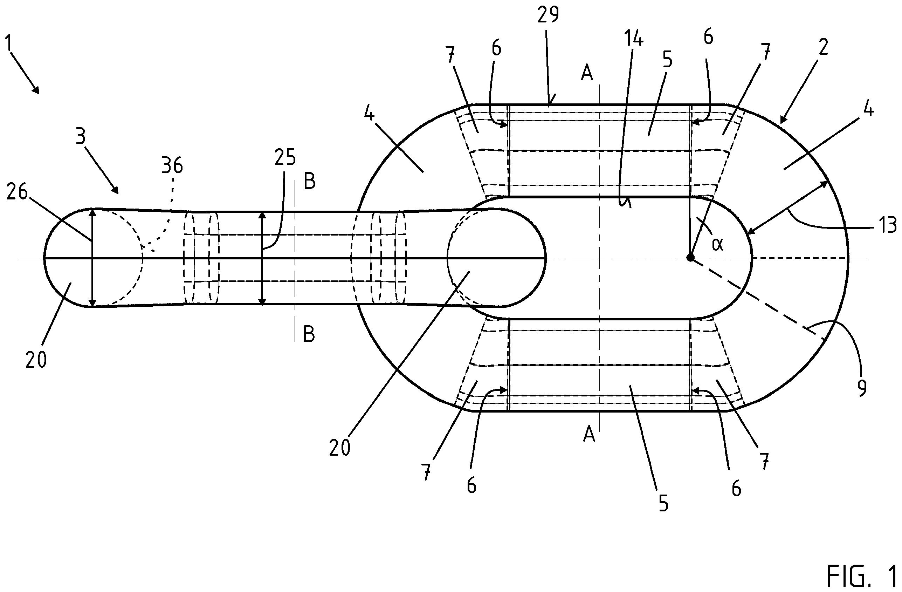

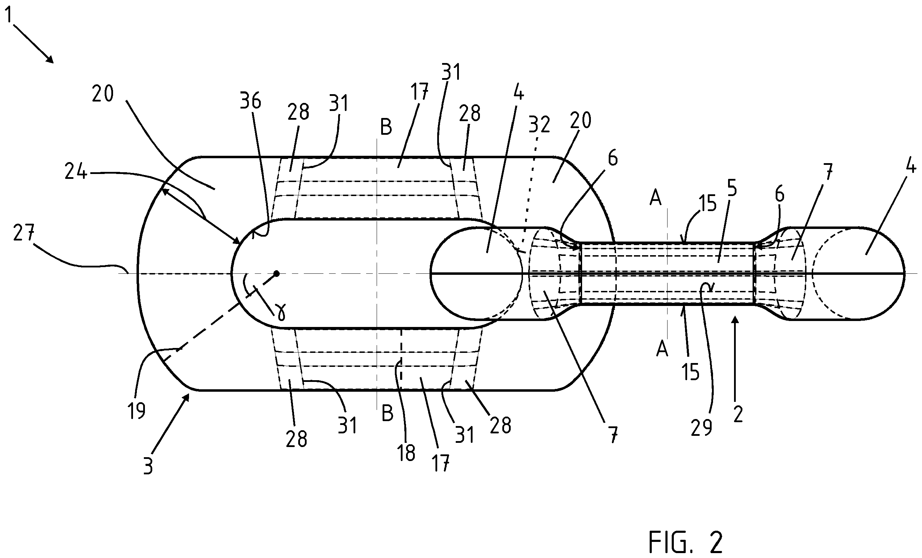

Figur 1 und 2 zeigen einen jeweiligen Ausschnitt aus einer Gliederkette 1 mit einem Horizontalglied 2 und einem Vertikalglied 3. Dabei zeigt Figur 1 das Horizontalglied 2 in Seitenansicht und das Vertikalglied 3 in Draufsicht und Figur 2 das Vertikalglied 3 in Seitenansicht und das Horizontalglied 2 in Draufsicht. Nicht näher dargestellt gliedern sich dann auf die Bildebene bezogen rechts ein weiteres Vertikalglied, gefolgt von einem Horizontalglied usw. an. Auf die Bildebene bezogen links gliedern sich ein Horizontalglied gefolgt von einem weiteren Vertikalglied und folgend an.

Das Horizontalglied 2 weist jeweils endseitig eine Rundung 4 auf, die in der Mitte über einen jeweiligen Schenkel 5 verbunden sind. Die beiden Schenkel 5 verlaufen parallel zueinander. Von einem Ende 6 des Schenkels 5 an erstreckt sich ein Übergangsbereich 7 zu der Rundung 4 hin. Erfindungsgemäß ist bevorzugt vorgesehen, dass der Schenkel 5 über seinen Verlauf die gleiche Querschnittsfläche 8 aufweist. Der Übergangsbereich 7 erstreckt sich ab dem Ende 6 in einem Winkel α von größer 0° bis zu einem Winkel kleiner 45°, so dass dann der Schenkel 5 in die Rundung 4 übergeht. Bevorzugt weist die Rundung 4 eine jeweilige Querschnittsfläche 9 auf, die über den Verlauf der Rundung 4 gleich ist.

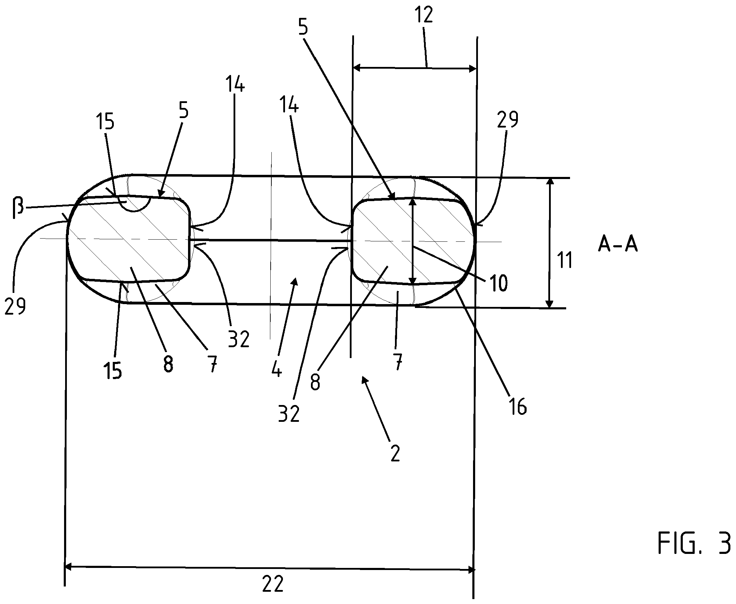

Die Schnittansicht A-A ist dargestellt in Figur 3. Die Querschnittsfläche 8 des jeweiligen Schenkels 5 ist gegenüber einer Querschnittsfläche 9 der Rundung 4 kleiner ausgebildet. Insbesondere ist die Breite 10 im Bereich des Schenkels 5 kleiner als die Breite 11 der Rundung 4 ausgebildet. Die Höhe 12 des Schenkels 5 ist kleiner oder gleich der Höhe 13 der Rundung 4 ausgebildet. Eine Innenseite 14 im Bereich des Schenkels 5 ist bevorzugt flach ausgebildet. Die Innenseite 32 der Rundung 4 ist bevorzugt im Querschnitt gebogen, insbesondere rund ausgebildet. Eine Seitenfläche 15 kann ebenfalls flach ausgebildet sein. Die Seitenfläche 15 kann jedoch auch zweigeteilt flach ausgebildet sein, wobei zwei Flächen in einem Winkel β zueinander verlaufen. Dieser Winkel β ist insbesondere stumpf ausgebildet in einem Winkelbereich kleiner 180° und größer 150°. Weiterhin bevorzugt ist ein Hüllkreis 16 um die Querschnittsfläche 8 des Schenkels 5 herum kleiner gleich der Querschnittsfläche 9 der Rundung 4 ausgebildet. Die Außenseite 29 des Schenkels 5 ist im Querschnitt abgerundet ausgebildet.

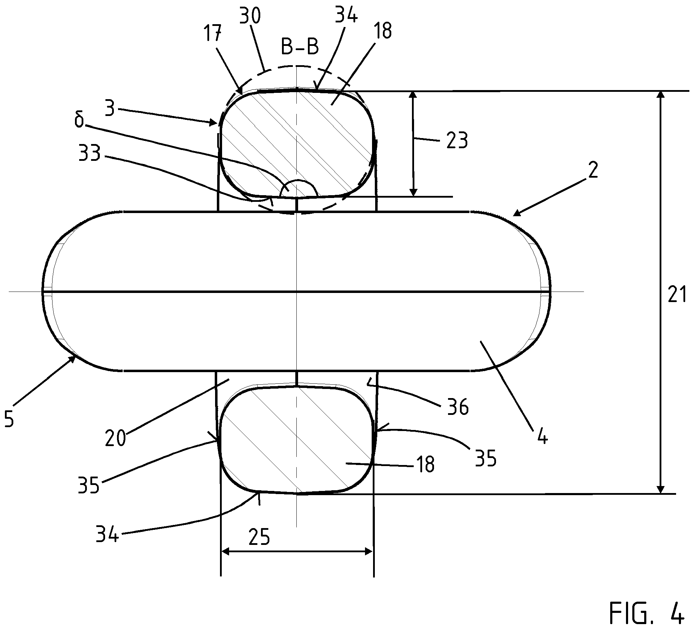

Figur 4 zeigt eine Schnittansicht entlang der Schnittlinie B-B aus Figur 2. Das Vertikalglied 3 weist hier im Bereich seiner Schenkel 17 eine Querschnittsfläche 18 auf, die kleiner ist als eine Querschnittsfläche 19 im Bereich der Rundung 20 des Vertikalgliedes 3. Zunächst ist im Vergleich zu Figur 3 zu erkennen, dass die absolute Höhe 21 des Vertikalgliedes 3 kleiner ist als die Höhe 22 des Horizontalgliedes 2. Die Höhe 23 des Schenkels 17 des Vertikalgliedes 3 ist kleiner als die Höhe 24 der Rundung 20 des Vertikalgliedes 3. Die Breite 25 des Schenkels 17 des Vertikalgliedes 3 entspricht im Wesentlichen der Breite des Vertikalgliedes 3 bzw. der Breite 26 der Rundung 20 des Vertikalgliedes 3, kann jedoch auch kleiner sein. Auch hier erstreckt sich ein jeweiliger Übergangsbereich.

Die Querschnittsfläche 19 des Vertikalgliedes 3 variiert entlang der Rundung 20. Von einer Mittelebene 27 aus nimmt die Querschnittsfläche 19 bis zu einem Winkel γ zunächst zu. Der Winkel γ liegt insbesondere zwischen 45° und 80°. Danach nimmt die Querschnittsfläche 19 der Rundung 20 des Vertikalgliedes 3 in Richtung zu dem Schenkel 17 wieder ab und geht dann auf die Querschnittsfläche 18 des Schenkels 17 über. Die Querschnittsfläche 18 des Schenkels 17 kann konstant über den Verlauf des Schenkels 17 bis zu dessen Ende 31 sein. Auch hier sind Übergangsbereiche 28 von Rundung 20 zu Schenkel 17 ausgebildet, in denen sich der Querschnitt ändert.

Die Innenseite 33 der Schenkel 17 ist bevorzugt abgeflacht, insbesondere flach ausgebildet. Auch kann die Innenseite 33 zweigeteilt durch zwei in einem Winkel δ zueinander ausgebildete Flächen sein. Der Winkel δ liegt bevorzugt zwischen 180° und 150°.

Auch eine Außenseite 34 des Schenkels 17 ist bevorzugt abgeflacht, insbesondere flach ausgebildet. Die Seitenflächen 35 können im Querschnitt gewölbt, jedoch auch wie hier dargestellt flach ausgebildet sein.

Die Ecken sind im Querschnitt bevorzugt abgerundet ausgebildet.

Eine Innenseite 36 der Rundung 20 ist bevorzugt im Querschnitt abgerundet, insbesondere rund ausgebildet.

Der Hüllkreis 30, in dem die Querschnittsfläche 18 des Schenkels 17 liegt, ist kleiner gleich der Querschnittsfläche 19 der Rundung 20.

### Bezugszeichen:

- 1 -: Gliederkette
- 2 -: Horizontalglied
- 3 -: Vertikalglied
- 4 -: Rundung zu 2
- 5 -: Schenkel zu 2
- 6 -: Ende zu 5
- 7 -: Übergangsbereich zu 2
- 8 -: Querschnittsfläche zu 5
- 9 -: Querschnittsfläche zu 4
- 10 -: Breite zu 5
- 11 -: Breite zu 4
- 12 -: Höhe zu 5
- 13 -: Höhe zu 4
- 14 -: Innenseite zu 5
- 15 -: Seitenfläche zu 5
- 16 -: Hüllkreis zu 8
- 17 -: Schenkel zu 3
- 18 -: Querschnittsfläche zu 17
- 19 -: Querschnittsfläche zu 20
- 20 -: Rundung zu 3
- 21 -: Höhe zu 3
- 22 -: Höhe zu 2
- 23 -: Höhe zu 17
- 24 -: Höhe zu 20
- 25 -: Breite zu 17
- 26 -: Breite zu 20
- 27 -: Mittelebene
- 28 -: Übergangsbereich zu 3
- 29 -: Außenseite zu 5
- 30 -: Hüllkreis zu 18
- 31 -: Ende zu 17
- 32 -: Innenseite zu 4
- 33 -: Innenseite zu 17
- 34 -: Außenseite zu 17
- 35 -: Seitenfläche zu 17
- 36 -: Innenseite zu 20

- α -: Winkel zu 7
- β -: Winkel zu 15
- γ -: Winkel zu 20
- δ -: Winkel zu 33

## Patentansprüche

1. Gliederkette (1), insbesondere für den untertägigen Einsatz im Bergbau, wobei die Gliederkette (1) aus einem Stahlwerkstoff hergestellt ist und Horizontalglieder (2) und Vertikalglieder (3) aufweist, wobei jedes Horizontalglied (2) und jedes Vertikalglied (3) jeweils parallel zueinander verlaufende Schenkel (5, 17) aufweist, die endseitig über Rundungen (4, 20) miteinander verbunden sind, wobei ein jeder Schenkel (5, 17) eine geringere Querschnittsfläche (8, 18) aufweist, gegenüber der Querschnittsfläche (9, 19) einer jeden Rundung (4, 20), wobei in den Rundungen die Horizontalglieder (2) und Vertikalglieder (3) ineinandergreifen, **dadurch gekennzeichnet, dass** die jeweilige Querschnittsfläche (8) der Schenkel (5) des Horizontalglieds (2) eine geringere Breite (10) aufweist, bei gleicher oder verringerter Höhe (12) in Relation zu der Querschnittsfläche (9) der Rundung (4) und dass die jeweilige Querschnittsfläche (18) der Schenkel (17) des Vertikalgliedes (3) eine geringere Höhe (23) aufweist, bei gleicher oder verringerter Breite (25) in Relation zu der Querschnittsfläche (19) der Rundung (20) und dass die Querschnittsfläche (8, 18) der Schenkel (5, 20) von einer kreisrunden Kontur verschieden ist, und dass eine Höhe (22) des Horizontalgliedes (2) größer ist als eine Höhe (21) des Vertikalgliedes (3).

2. Gliederkette nach Anspruch 1, **dadurch gekennzeichnet, dass** die Querschnittsflächen (8, 18) der Schenkel (5, 17) von Horizontalglied (2) und Vertikalglied (3) gleich sind.

3. Gliederkette nach Anspruch 1 oder 2, **dadurch gekennzeichnet, dass** ein Übergangsbereich (7, 28) von der Querschnittsfläche (8, 18) des Schenkels (5, 17) zu der Querschnittsfläche (9, 19) der Rundung (4, 20) am Ende (6, 31) eines jeweiligen Schenkels (5, 17) beginnt und sich vorzugsweise bei Seitenansicht über einen Winkel größer 0 bis kleiner 45 Grad erstreckt.

4. Gliederkette nach einem der Ansprüche 1 bis 3, **dadurch gekennzeichnet, dass** der Übergangsbereich (7) des Horizontalgliedes (2) als Anschlag für einen Mitnehmer ausgebildet ist.

5. Gliederkette nach einem der Ansprüche 1 bis 4, **dadurch gekennzeichnet, dass** ein Hüllkreis (16, 30) der Querschnittsfläche (8, 18) des Schenkels (5, 17) in einem Hüllkreis der Querschnittsfläche (9, 19) der Rundung (4, 20) liegt.

6. Gliederkette nach einem der Ansprüche 1 bis 5, **dadurch gekennzeichnet, dass** die Querschnittskontur eines Schenkels (5) des Horizontalgliedes (2) an einer Außenseite (29) abgerundet ausgebildet ist, insbesondere der Außenkontur der Rundung (4) folgend.

7. Gliederkette nach einem der Ansprüche 1 bis 6, **dadurch gekennzeichnet, dass** die Querschnittskontur des Schenkels (5) des Horizontalgliedes (2) an einer Innenseite (14) flach ausgebildet ist und dass die Seitenflächen (15) flach ausgebildet sind oder dass die Seitenflächen (15) jeweils als zweiteilig in einem Winkel (β) zueinander verlaufende Flächen ausgebildet sind.

8. Gliederkette nach einem der Ansprüche 1 bis 7, **dadurch gekennzeichnet, dass** die Querschnittskontur des Schenkels (17) des Vertikalgliedes (3) rechteckig mit abgerundeten Ecken ausgebildet ist.

9. Gliederkette nach einem der Ansprüche 1 bis 8, **dadurch gekennzeichnet, dass** die Querschnittsfläche (19) in den Rundungen (20) variiert, insbesondere bei dem Vertikalglied (3).

10. Gliederkette nach einem der Ansprüche 1 bis 9, **dadurch gekennzeichnet, dass** die Querschnittsfläche (19) des Vertikalgliedes (3) von einer Mittelebene (27), der Rundung (19) folgend bis zu einem Winkel (γ) zwischen 45 und 80 Grad zunehmend ausgebildet ist und dann zum Schenkel (17) hin die Querschnittsfläche (19) abnehmend ausgebildet ist.

## Claims

1. Link chain (1), in particular for the underground use in mining, wherein the link chain (1) is manufactured from a steel material and has horizontal links (2) and vertical links (3), wherein each horizontal link (2) and each vertical link (3) has in each case legs (5, 17) extending parallel to one another which are connected with one another at the ends via roundings (4, 20), wherein each single leg (5, 17) has a lesser cross-sectional surface (8, 18) than the cross-sectional surface (9, 19) of each single rounding (4, 20), wherein in the roundings the horizontal links (2) and vertical links (3) engage in one another, **characterised in that** the respective cross-sectional surface (8) of the legs (5) of the horizontal link (2) has a lesser breadth (10) with the same or reduced height (12) in relation to the cross-sectional surface (9) of the rounding (4) and that the respective cross-sectional surface (18) of the legs (17) of the vertical link (3) has a lesser height (23) with the same or reduced breadth (25) in relation to the cross-sectional surface (19) of the rounding (20) and that the cross-sectional surface (8, 18) of the legs (5, 20) is different from a circular contour, and that a height (22) of the horizontal link (2) is greater than a height (21) of the vertical link (3).

2. Link chain according to claim 1, **characterised in that** the cross-sectional surfaces (8, 18) of the legs (5, 17) of horizontal link (2) and vertical link (3) are equal.

3. Link chain according to claim 1 or 2, **characterised in that** a transition area (7, 28) from the cross-sectional surface (8, 18) of the leg (5, 17) to the cross-sectional surface (9, 19) of the rounding (4, 20) begins at the end (6, 31) of a respective leg (5, 17) and extends preferably, viewed from the side, over an angle greater than 0 to less than 45 degrees.

4. Link chain according to any of claims 1 to 3, **characterised in that** the transition area (7) of the horizontal link (2) is configured as a stop for a tappet.

5. Link chain according to any of claims 1 to 4, **characterised in that** a minimum circumscribed circle (16, 30) of the cross-sectional surface (8, 18) of the leg (5, 17) lies in a minimum circumscribed circle of the cross-sectional surface (9, 19) of the rounding (4, 20).

6. Link chain according to any of claims 1 to 5, **characterised in that** the cross-section contour of a leg (5) of the horizontal link (2) is designed rounded on an outer side (29), in particular following the outer contour of the rounding (4).

7. Link chain according to any of claims 1 to 6, **characterised in that** the cross-section contour of the leg (5) of the horizontal link (2) is formed flatly on an inner side (14) and that the side surfaces (15) are formed flatly or that the side surfaces (15) are designed respectively as two-part surfaces running at an angle (β) to one another.

8. Link chain according to any of claims 1 to 7, **characterised in that** the cross-section contour of the leg (17) of the vertical link (3) is formed rectangularly with rounded corners.

9. Link chain according to any of claims 1 to 8, **characterised in that** the cross-sectional surface (19) varies in the roundings (20), in particular in the case of the vertical link (3).

10. Link chain according to any of claims 1 to 9, **characterised in that** the cross-sectional surface (19) of the vertical link (3) is formed increasing from a middle plane (27), following the rounding (19) up to an angle (γ) of between 45 and 80 degrees, and then the cross-sectional surface (19) is formed decreasing towards the leg (17).

## Revendications

1. Chaîne à maillons (1), en particulier pour l'utilisation souterraine dans l'exploitation minière, dans laquelle la chaîne à maillons (1) est fabriquée à partir d'un matériau acier et présente des maillons horizontaux (2) et des maillons verticaux (3), dans laquelle chaque maillon horizontal (2) et chaque maillon vertical (3) présente des branches (5, 17) s'étendant respectivement parallèlement l'une à l'autre, qui sont reliées côté extrémité l'une à l'autre par l'intermédiaire d'arrondis (4, 20), dans laquelle chaque branche (5, 17) présente une surface de section transversale (8, 18) plus petite par rapport à la surface de section transversale (9, 19) de chaque arrondi (4, 20), dans laquelle les maillons horizontaux (2) et maillons verticaux (3) s'imbriquent dans les arrondis, **caractérisée en ce que** la surface de section transversale (8) respective des branches (5) du maillon horizontal (2) présente une largeur (10) moins importante, pour une hauteur (12) identique ou plus petite, par rapport à la surface de section transversale (9) de l'arrondi (4), et que la surface de section transversale (18) respective des branches (17) du maillon vertical (3) présente une hauteur (23) moins importante, pour une largeur (25) identique ou plus petite, par rapport à la surface de section transversale (19) de l'arrondi (20), et que la surface de section transversale (8, 18) des branches (5, 20) sont différentes d'un contour circulaire, et qu'une hauteur (22) du maillon horizontal (2) est supérieure à une hauteur (21) du maillon vertical (3).

2. Chaîne à maillons selon la revendication 1, **caractérisée en ce que** les surfaces de section transversale (8, 18) des branches (5, 17) du maillon horizontal (2) et maillon vertical (3) sont identiques.

3. Chaîne à maillons selon la revendication 1 ou 2, **caractérisée en ce qu'**une zone de transition (7, 28) de la surface de section transversale (8, 18) de la branche (5, 17) à la surface de section transversale (9, 19) de l'arrondi (4, 20) commence à l'extrémité (6, 31) d'une branche (5, 17) respective et s'étend de préférence en vue latérale sur un angle supérieur à 0 jusqu'à inférieur à 45 degrés.

4. Chaîne à maillons selon l'une quelconque des revendications 1 à 3, **caractérisée en ce que** la zone de transition (7) du maillon horizontal (2) est réalisée sous la forme d'une butée pour un entraîneur.

5. Chaîne à maillons selon l'une quelconque des revendications 1 à 4, **caractérisée en ce qu'**un cercle circonscrit (16, 30) de la surface de section transversale (8, 18) de la branche (5, 17) se situe dans un cercle circonscrit de la surface de section transversale (9, 19) de l'arrondi (4, 20).

6. Chaîne à maillons selon l'une quelconque des revendications 1 à 5, **caractérisée en ce que** le contour de section transversale d'une branche (5) du maillon horizontal (2) est réalisé de manière arrondie sur un côté extérieur (29), en particulier de manière à suivre le contour extérieur de l'arrondi (4).

7. Chaîne à maillons selon l'une quelconque des revendications 1 à 6, **caractérisée en ce que** le contour de section transversale de la branche (5) du maillon horizontal (2) est réalisé de manière plate sur un côté intérieur (14) et que les surfaces latérales (15) sont réalisées de manière plate ou que les surfaces latérales (15) sont réalisées respectivement sous la forme de surfaces s'étendant en deux parties selon un angle (β) l'une par rapport à l'autre.

8. Chaîne à maillons selon l'une quelconque des revendications 1 à 7, **caractérisée en ce que** le contour de section transversale de la branche (17) du maillon vertical (3) est réalisé de manière rectangulaire avec des coins arrondis.

9. Chaîne à maillons selon l'une quelconque des revendications 1 à 8, **caractérisée en ce que** la surface de section transversale (19) dans les arrondis (20) varie, en particulier pour le maillon vertical (3).

10. Chaîne à maillons selon l'une quelconque des revendications 1 à 9, **caractérisée en ce que** la surface de section transversale (19) du maillon vertical (3) est réalisée de manière à augmenter d'un plan médian (27), en suivant l'arrondi (19), jusqu'à un angle (y) compris entre 45 et 80 degrés et la surface de section transversale (19) est réalisée de manière à diminuer ensuite en direction de la branche (17).
